# EUROPEAN PATENT APPLICATION

(11) **EP 3 846 528 A1**
(43) Date of publication of application: **07.07.2021**
(21) Application number: 19865521.9
(22) Date of filing: 23.09.2019
(51) Int. Cl.: H04W 24/10

(54) **METHOD AND DEVICE FOR PROCESSING MEASUREMENT REPORT ENTRY**

(30) Priority: 28.09.2018 CN 201811142494
(71) Applicant: HUAWEI TECHNOLOGIES CO., LTD., Shenzhen, Guangdong 518129 (CN)
(72) Inventor: ZHENG, Lili, Shenzhen, Guangdong 518129 (CN); ZHANG, Hongping, Shenzhen, Guangdong 518129 (CN); ZENG, Qinghai, Shenzhen, Guangdong 518129 (CN); LECOMPTE, David, Shenzhen, Guangdong 518129 (CN)
(74) Representative: Isarpatent
(86) International application number: PCT/CN2019/107291
(87) International publication number: WO 2020/063534

(57) **Abstract**

A measurement reporting entry processing method and a device are provided, to resolve a problem that in the current technology, flexibility is relatively poor when a terminal device processes a measurement reporting entry. The method includes: receiving indication information from a network device, where the indication information is used to indicate a processing manner of a measurement reporting entry; and processing the measurement reporting entry based on the indication information.

## Description

This application claims priority to Chinese Patent Application No. 201811142494.1, filed with the China National Intellectual Property Administration on September 28, 2018 and entitled "MEASUREMENT REPORTING ENTRY PROCESSING METHOD AND DEVICE", which is incorporated herein by reference in its entirety.

### TECHNICAL FIELD

This application relates to the field of communications technologies, and in particular, to a measurement reporting entry processing method and a device.

### BACKGROUND

Mobility management is an important part of a wireless communication system. Based on a UE status, the mobility management may be classified into two parts: mobility management in an idle state (RRC_IDLE state) and mobility management in a connected state (RRC_CONNECTED state). In the idle state, the mobility management mainly means a cell selection/reselection (cell selection/reselection) process, and in the connected state, the mobility management mainly means cell handover (handover). Cell selection, reselection, and handover are all performed based on results of mobility measurement. Therefore, the mobility measurement is the basis of the mobility management.

In a mobility measurement process, UE measures a cell based on measurement configuration information sent by a network device, and reports a measurement report to the network device. If the network device reconfigures the measurement configuration information, the UE clears a measurement reporting entry associated with the reconfigured information. For example, when the network device reconfigures a measurement parameter of a measurement object, a terminal device clears all measurement reporting entries associated with the measurement object. It can be learned that flexibility of this manner of clearing all the measurement reporting entries associated with the reconfigured information is relatively poor.

### SUMMARY

This application provides a measurement reporting entry processing method and apparatus, to resolve a problem that in the current technology, flexibility is relatively poor when a terminal device processes a measurement reporting entry.

According to a first aspect, this application provides a measurement reporting entry processing method. The method may be applied to a terminal device, a chip, a chipset, a function module that performs the method in a chip, or the like. The method includes: receiving indication information from a network device, where the indication information is used to indicate a processing manner of a measurement reporting entry; and processing the measurement reporting entry based on the indication information. In this embodiment of this application, the network device sends the indication information to the terminal device to indicate the processing manner of the measurement reporting entry. Compared with the current technology in which a terminal device clears, when reconfiguring measurement configuration information, all measurement reporting entries associated with the reconfigured information, in this embodiment of this application, the network device may instruct the terminal device to process measurement reporting entries associated with the reconfigured information, for example, all the measurement reporting entries associated with the reconfigured information are cleared, some measurement reporting entries associated with the reconfigured information are retained, and all the measurement reporting entries associated with the reconfigured information are retained, thereby improving flexibility of processing measurement reporting entries by the terminal device.

In a possible design, the receiving indication information from a network device may include: receiving first indication information and second indication information from the network device, where the first indication information is used to indicate whether to clear a measurement reporting entry corresponding to a first reference signal, and the second indication information is used to indicate whether to clear a measurement reporting entry corresponding to a second reference signal. In the foregoing design, the network device sends two pieces of indication information to the terminal device to respectively indicate whether to clear the measurement reporting entry corresponding to the first reference signal and whether to clear the measurement reporting entry corresponding to the second reference signal. Therefore, when the terminal device reconfigures measurement configuration information, useful measurement reporting entries in measurement reporting entries may be retained. For example, when a measurement parameter of an SSB is reconfigured, a measurement reporting entry corresponding to a CSI-RS is not cleared. Therefore, a case in which measurement reporting is triggered again due to deletion of the useful measurement reporting entries can be avoided, and further an increase in signaling used for measurement reporting by the terminal device caused by the deletion of the useful measurement reporting entries can be reduced. In addition, in this embodiment of this application, the processing manner of the measurement reporting entry may be determined as required, so that flexibility can be improved.

In a possible design, the receiving first indication information and second indication information from the network device may include: receiving measurement configuration information from the network device, where the measurement configuration information carries the first indication information and the second indication information. In the foregoing design, the first indication information and the second indication information are carried in the measurement configuration information, and the first indication information and the second indication information are valid for all measurement objects and/or all reporting configurations in the measurement configuration information.

In a possible design, the processing the measurement reporting entry based on the indication information may include: when a measurement parameter of any measurement object and/or a measurement parameter of any reporting configuration is reconfigured, processing, based on the first indication information, a measurement reporting entry that is associated with the any measurement object and whose reference signal in an associated reporting configuration is the first reference signal and/or a measurement reporting entry that is associated with the any reporting configuration and whose reference signal in the associated reporting configuration is the first reference signal; and processing, based on the second indication information, a measurement reporting entry that is associated with the any measurement object and whose reference signal is the second reference signal and/or a measurement reporting entry that is associated with the any reporting configuration and whose reference signal is the second reference signal. Because the first indication information and the second indication information are valid for all measurement objects and/or all reporting configurations in the measurement configuration information, when reconfiguring any measurement object and/or any reporting configuration in the measurement configuration information, the terminal device may process, based on the first indication information, a measurement reporting entry whose reference signal is the first reference signal in measurement reporting entries associated with the reconfigured information, and process, based on the second indication information, a measurement reporting entry whose reference signal is the second reference signal in the measurement reporting entries associated with the reconfigured information. The reconfigured information means a reconfigured measurement object or a reconfigured reporting configuration.

In a possible design, the receiving first indication information and second indication information from the network device may include: receiving measurement configuration information from the network device, where the measurement configuration information carries a measurement parameter of a first measurement object, and the measurement parameter of the first measurement object includes the first indication information and the second indication information. In the foregoing design, the first indication information and the second indication information are carried in the first measurement object, and the first indication information and the second indication information are valid for the first measurement object.

In a possible design, the processing the measurement reporting entry based on the indication information may include: when the measurement parameter of the first measurement object is reconfigured, processing, based on the first indication information, a measurement reporting entry that is associated with the first measurement object and whose reference signal in an associated reporting configuration is the first reference signal; and processing, based on the second indication information, a measurement reporting entry that is associated with the first measurement object and whose reference signal in the associated reporting configuration is the second reference signal. Because the first indication information and the second indication information are valid only for the first measurement object, when reconfiguring the measurement parameter of the first measurement object, the terminal device may process, based on the first indication information, a measurement reporting entry whose reference signal is the first reference signal in measurement reporting entries associated with the first measurement object, and process, based on the second indication information, a measurement reporting entry whose reference signal is the second reference signal in the measurement reporting entries associated with the first measurement object.

In a possible design, the receiving first indication information and second indication information from the network device may include: receiving measurement configuration information from the network device, where the measurement configuration information carries a measurement parameter of a first reporting configuration, and the measurement parameter of the first reporting configuration includes the first indication information and the second indication information. In the foregoing design, the first indication information and the second indication information are carried in the first reporting configuration, and the first indication information and the second indication information are valid for the first reporting configuration.

In a possible design, the processing the measurement reporting entry based on the indication information may include: when the measurement parameter of the first reporting configuration is reconfigured, if a reference signal type of the first reporting configuration is the first reference signal, processing, based on the first indication information, a measurement reporting entry associated with the first reporting configuration; and if a reference signal type of the first reporting configuration is the second reference signal, processing, based on the second indication information, a measurement reporting entry associated with the first reporting configuration. Because the first indication information and the second indication information are valid only for the first reporting configuration, when the terminal device reconfigures the measurement parameter of the first reporting configuration, if the reference signal type of the first reporting configuration is the first reference signal, the terminal device may process, based on the first indication information, the measurement reporting entry associated with the first reporting configuration; and if the reference signal type of the first reporting configuration is the second reference signal, may process, based on the second indication information, the measurement reporting entry associated with the first reporting configuration.

In a possible design, the receiving indication information from a network device may include: receiving third indication information from the network device, where the third indication information is used to indicate whether to clear the measurement reporting entry. In the foregoing design, the network device sends one piece of indication information to the terminal device to indicate whether to clear a measurement reporting entry. Therefore, when reconfiguring measurement configuration information, the terminal device may not clear a measurement reporting entry as required, so that useful measurement reporting entries in measurement reporting entries can be retained, thereby avoiding a case in which measurement reporting is triggered again because the useful measurement reporting entries are deleted, and further reducing an increase in signaling used for measurement reporting by the terminal device caused by the deletion of the useful measurement reporting entries. In addition, in this embodiment of this application, the processing manner of the measurement reporting entry may be determined as required, so that flexibility can be improved.

In a possible design, the receiving third indication information from the network device may include: receiving measurement configuration information from the network device, where the measurement configuration information carries the third indication information. In the foregoing design, the third indication information is carried in the measurement configuration information, and the third indication information is valid for all measurement objects and/or all reporting configurations in the measurement configuration information.

In a possible design, the processing the measurement reporting entry based on the indication information may include: when a measurement parameter of any measurement object and/or a measurement parameter of any reporting configuration is reconfigured, processing, based on the third indication information, a measurement reporting entry associated with the any measurement object and/or a measurement reporting entry associated with the any reporting configuration. Because the third indication information is valid for all the measurement objects and/or all the reporting configurations in the measurement configuration information, when reconfiguring any measurement object and/or any reporting configuration in the measurement configuration information, the terminal device may process, based on the third indication information, a measurement reporting entry associated with reconfigured information. The reconfigured information means a reconfigured measurement object or a reconfigured reporting configuration.

In a possible design, the receiving third indication information from the network device may include: receiving measurement configuration information from the network device, where the measurement configuration information carries a measurement parameter of a second measurement object, and the measurement parameter of the second measurement object includes the third indication information. In the foregoing design, the third indication information is carried in the second measurement object, and the third indication information is valid for the second measurement object.

In a possible design, the processing the measurement reporting entry based on the indication information may include: when the measurement parameter of the second measurement object is reconfigured, processing, based on the third indication information, a measurement reporting entry associated with the second measurement object. Because the third indication information is valid only for the second measurement object, when reconfiguring the measurement parameter of the second measurement object, the terminal device may process, based on the third indication information, the measurement reporting entry associated with the second measurement object.

In a possible design, the receiving third indication information from the network device may include: receiving measurement configuration information from the network device, where the measurement configuration information carries a measurement parameter of a second reporting configuration, and the measurement parameter of the second reporting configuration includes the third indication information. In the foregoing design, the third indication information is carried in the second reporting configuration, and the third indication information is valid for the second reporting configuration.

In a possible design, the processing the measurement reporting entry based on the indication information may include: when the measurement parameter of the second reporting configuration is reconfigured, processing, based on the third indication information, a measurement reporting entry associated with the second reporting configuration. Because the third indication information is valid only for the second reporting configuration, when reconfiguring the measurement parameter of the second reporting configuration, the terminal device may process, based on the third indication information, the measurement reporting entry associated with the second reporting configuration.

In a possible design, the method may further include: stopping a timer related to a measurement identity associated with a measurement reporting entry when the measurement reporting entry is cleared, and resetting a parameter related to the measurement identity associated with the measurement reporting entry.

In a possible design, the method may further include: reporting capability information to the network device, where the capability information is used to indicate the network device that the terminal device supports processing, under an indication of the network device, the measurement reporting entry. In the foregoing design, the network device may determine, based on the capability information sent by the terminal device, whether the terminal device supports processing, under the indication of the network device, the measurement reporting entry, so that when the terminal device supports processing, under the indication of the network device, the measurement reporting entry, indication information of a processing manner of a measurement reporting entry may be sent to the terminal device.

According to a second aspect, this application provides a measurement reporting entry processing method. The method may be applied to a network device, a chip, a chipset, a function module that performs the method in a chip, or the like. The method includes: determining indication information, where the indication information is used to indicate a processing manner of a measurement reporting entry; and sending the indication information to a terminal device. In this embodiment of this application, the network device sends the indication information to the terminal device to indicate the processing manner of the measurement reporting entry. Compared with the current technology in which a terminal device clears, when reconfiguring measurement configuration information, all measurement reporting entries associated with the reconfigured information, in this embodiment of this application, the network device may instruct the terminal device to process measurement reporting entries associated with the reconfigured information, for example, all the measurement reporting entries associated with the reconfigured information are cleared, some measurement reporting entries associated with the reconfigured information are retained, and all the measurement reporting entries associated with the reconfigured information are retained, thereby improving flexibility of processing measurement reporting entries by the terminal device.

In a possible design, the sending the indication information to a terminal device may include: sending first indication information and second indication information to the terminal device, where the first indication information is used to indicate the terminal device whether to clear a measurement reporting entry corresponding to a first reference signal, and the second indication information is used to indicate whether to clear a measurement reporting entry corresponding to a second reference signal. After some measurement reporting entries in measurement reporting entries are deleted, a related cell triggers measurement reporting again, and in the foregoing design, the network device sends two pieces of indication information to the terminal device to respectively indicate whether to clear the measurement reporting entry corresponding to the first reference signal and whether to clear the measurement reporting entry corresponding to the second reference signal. Therefore, when the terminal device reconfigures measurement configuration information, useful measurement reporting entries in measurement reporting entries may be retained. For example, when a measurement parameter of an SSB is reconfigured, a measurement reporting entry corresponding to a CSI-RS is not cleared. Therefore, a case in which measurement reporting is triggered again due to deletion of the useful measurement reporting entries can be avoided, and further an increase in signaling used for measurement reporting by the terminal device caused by the deletion of the useful measurement reporting entries can be reduced. In addition, in this embodiment of this application, the processing manner of the measurement reporting entry may be determined as required, so that flexibility can be improved.

In a possible design, the sending first indication information and second indication information to the terminal device may include: sending measurement configuration information to the terminal device, where the measurement configuration information carries the first indication information and the second indication information. In the foregoing design, the first indication information and the second indication information are carried in the measurement configuration information, and the first indication information and the second indication information are valid for all measurement objects and/or all reporting configurations in the measurement configuration information.

In a possible design, the sending first indication information and second indication information to the terminal device may include: sending measurement configuration information to the terminal device, where the measurement configuration information carries a measurement parameter of a first measurement object, and the measurement parameter of the first measurement object includes the first indication information and the second indication information. In the foregoing design, the first indication information and the second indication information are carried in the first measurement object, and the first indication information and the second indication information are valid for the first measurement object.

In a possible design, the sending first indication information and second indication information to the terminal device may include: sending measurement configuration information to the terminal device, where the measurement configuration information carries a measurement parameter of a first reporting configuration, and the measurement parameter of the first reporting configuration includes the first indication information and the second indication information. In the foregoing design, the first indication information and the second indication information are carried in the first reporting configuration, and the first indication information and the second indication information are valid for the first reporting configuration.

In a possible design, the sending the indication information to a terminal device may include: sending third indication information to the terminal device, where the third indication information is used to indicate whether to clear the measurement reporting entry. In the foregoing design, the network device sends one piece of indication information to the terminal device to indicate whether to clear a measurement reporting entry. Therefore, when reconfiguring measurement configuration information, the terminal device may not clear a measurement reporting entry as required, so that useful measurement reporting entries in measurement reporting entries can be retained, thereby avoiding a case in which measurement reporting is triggered again because the useful measurement reporting entries are deleted, and further reducing an increase in signaling used for measurement reporting by the terminal device caused by the deletion of the useful measurement reporting entries. In addition, in this embodiment of this application, the processing manner of the measurement reporting entry may be determined as required, so that flexibility can be improved.

In a possible design, the sending third indication information to the terminal device may include: sending measurement configuration information to the terminal device, where the measurement configuration information carries the third indication information. In the foregoing design, the third indication information is carried in the measurement configuration information, and the third indication information is valid for all measurement objects and/or all reporting configurations in the measurement configuration information.

In a possible design, the sending third indication information to the terminal device may include: sending measurement configuration information to the terminal device, where the measurement configuration information carries a measurement parameter of a second measurement object, and the measurement parameter of the second measurement object includes the third indication information. In the foregoing design, the third indication information is carried in the second measurement object, and the third indication information is valid for the second measurement object.

In a possible design, the sending third indication information to the terminal device may include: sending measurement configuration information to the terminal device, where the measurement configuration information carries a measurement parameter of a second reporting configuration, and the measurement parameter of the second reporting configuration includes the third indication information. In the foregoing design, the third indication information is carried in the second reporting configuration, and the third indication information is valid for the second reporting configuration.

In a possible design, the method may further include: receiving capability information from the terminal device, where the capability information is used to indicate that the terminal device supports processing, under an indication of the network device, the measurement reporting entry. In the foregoing design, the network device may determine, based on the capability information sent by the terminal device, whether the terminal device supports processing, under the indication of the network device, the measurement reporting entry, so that when the terminal device supports processing, under the indication of the network device, the measurement reporting entry, indication information of a processing manner of a measurement reporting entry may be sent to the terminal device.

According to a third aspect, this application provides an apparatus. The apparatus may be a terminal device, or may be a chip or chipset in a terminal device, or may be a network device, or may be a chip or chipset in a network device. The apparatus may include a processing unit and a transceiver unit. When the apparatus is the network device or the terminal device, the processing unit may be a processor, and the transceiver unit may be a transceiver. The apparatus may further include a storage unit, and the storage unit may be a memory. The storage unit is configured to store an instruction, and the processing unit executes the instruction stored in the storage unit, so that the terminal device performs a corresponding function in the first aspect, or the processing unit executes the instruction stored in the storage unit, so that the network device performs a corresponding function in the second aspect. When the apparatus is the chip or the chipset in the terminal device or the chip or the chipset in the network device, the processing unit may be a processor, and the transceiver unit may be an input/output interface, a pin, a circuit, or the like. The processing unit executes the instruction stored in the storage unit, so that the terminal device performs the corresponding function in the first aspect, or the processing unit executes the instruction stored in the storage unit, so that the network device performs the corresponding function in the second aspect. The storage unit may be a storage unit (for example, a register or a cache) in the chip or the chipset, or may be a storage unit (for example, a read-only memory or a random access memory) that is in the terminal device and that is located outside the chip or chipset.

According to a fourth aspect, an apparatus is provided, including: a processor, a communications interface, and a memory. The communications interface is configured to transmit information, and/or a message, and/or data between the apparatus and another apparatus. The memory is configured to store a computer executable instruction, and when the apparatus runs, the processor executes the computer executable instruction stored in the memory, so that the apparatus performs the measurement reporting entry processing method according to the first aspect or any one of the first aspect, or the measurement reporting entry processing method according to the second aspect or any one of the second aspect.

According to a fifth aspect, this application further provides a system. The system includes the terminal device in any embodiment of the first aspect and the network device in any embodiment of the second aspect.

According to a sixth aspect, this application further provides a computer readable storage medium, and the computer readable storage medium stores an instruction. When the instruction is run on a computer, the computer is enabled to perform the methods in the foregoing aspects.

According to a seventh aspect, this application further provides a computer program product that includes an instruction. When the instruction is run on a computer, the computer is enabled to perform the method in the foregoing aspects.

### BRIEF DESCRIPTION OF DRAWINGS

FIG. 1 is a schematic diagram of an architecture of a communications system according to this application;
FIG. 2 is a schematic diagram of a measurement identity according to this application;
FIG. 3 is a schematic flowchart of a measurement reporting entry processing method according to this application;
FIG. 4 is a schematic structural diagram of a measurement reporting entry processing apparatus according to this application; and
FIG. 5 is a schematic structural diagram of a communications apparatus according to this application.

### DESCRIPTION OF EMBODIMENTS

To make the objectives, technical solutions, and advantages of this application clearer, the following further describes this application in detail with reference to the accompanying drawings.

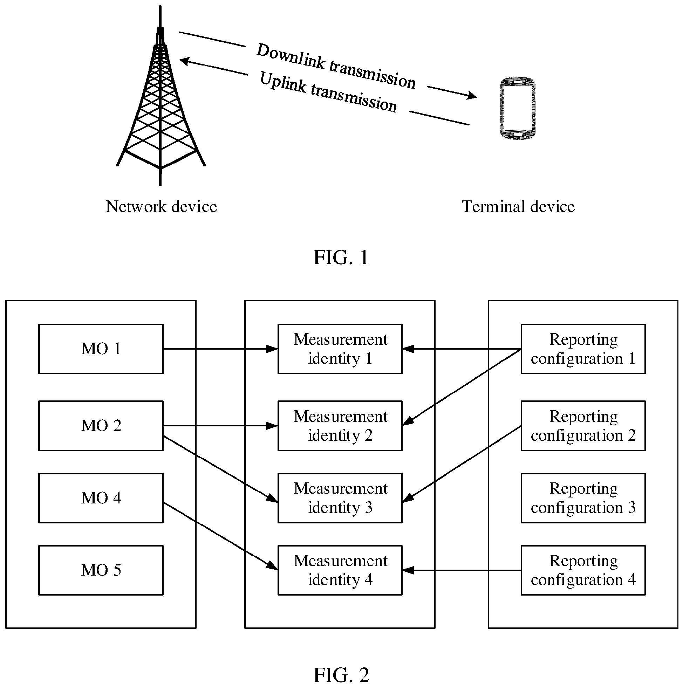

A measurement reporting entry processing method provided in this application may be applied to a communications system. An architecture of the communications system may be shown in FIG. 1, and includes a network device and a terminal device. The communications system in the embodiments of this application may be various communications systems, for example, may be a long term evolution (long term evolution, LTE) system, may be a fifth generation (5G) communications system, or may be a universal terrestrial radio access (universal terrestrial radio access, UTRA) network, an evolved UTRAN (E-UTRAN), or a new radio (new radio, NR) system, a GSM/EDGE radio access network-circuit switched (GSM EDGE radio access network-circuit switched, GERAN-CS) domain system, a GSM/EDGE radio access network-packet switched (GSM EDGE radio access network-packet switched, GERAN-PS) domain system, a code division multiple access (code division multiple access, CDMA) 2000-1XRTT system, a multi-RAT dual connectivity (Multi-RAT Dual-Connectivity, MR-DC) system, and the like, or may be a hybrid architecture of a plurality of communications systems, for example, a hybrid architecture of LTE and 5G.

A network device may be a common base station (for example, a NodeB or an eNB), may be a new radio controller (new radio controller, NR controller), may be a gNodeB (gNB) in a 5G system, may be a centralized unit (Centralized Unit), or may be a new radio base station, may be a remote radio module, may be a micro base station, may be a relay (relay), may be a distributed unit (Distributed Unit), may be a transmission reception point (transmission reception point, TRP), or a transmission point (transmission point, TP), or any other wireless access device. However, the embodiments of this application are not limited thereto.

A terminal device 102 is also referred to as user equipment (user equipment, UE), and is a device that provides a user with voice and/or data connectivity, for example, a handheld device or a vehicle-mounted device that has a wireless connection function. Common terminals include, for example, a mobile phone, a tablet computer, a notebook computer, a palmtop computer, a mobile Internet device (mobile internet device, MID), and a wearable device such as a smartwatch, a smart band, or a pedometer.

Mobility management is an important part of a wireless communication system. Based on a UE status, the mobility management may be classified into two parts: mobility management in an idle state (RRC_IDLE state) and mobility management in a connected state (RRC_CONNECTED state). In the idle state, the mobility management mainly means a cell selection/reselection (cell selection/reselection) process, and in the connected state, the mobility management mainly means cell handover (handover). Cell selection, reselection, and handover are all performed based on results of mobility measurement. Therefore, the mobility measurement is the basis of the mobility management.

A mobility measurement process is as follows:
Step 1: A network device sends measurement configuration information (measConfig) to a terminal device.
Step 2: The terminal device performs measurement based on the measurement configuration information, and reports a measurement result to the network device.

The measurement configuration information includes a measurement object (measurement object, MO), a reporting configuration (reporting configuration, reportConfig), a measurement identity (measurement identity, measld), a measurement quantity configuration (quantity configuration), a measurement gap configuration, and the like.

Measurement object (measurement object, MO): One MO in an LTE system corresponds to one frequency, and a measurement parameter of the measurement object includes a configuration status of a measurement resource on the frequency, for example, a list of cells on the frequency channel number. In an NR system, a measurement parameter of an MO may include a measurement parameter corresponding to a synchronization signal/physical broadcast channel block (synchronization signal block/PBCH block, SSB), and may further include a measurement parameter corresponding to a channel state information-reference signal (channel state information-reference signals, CSI-RS).

Reporting configuration: A measurement parameter of the reporting configuration includes a reference signal type, a reporting type, a reporting format, and the like. The reporting type includes event triggered reporting, periodically triggered reporting, or cell global identification (cell global identification, CGI) reporting. If the reporting type is event triggered reporting, the measurement parameter further includes an event type, a threshold, duration that meets a trigger condition (time to trigger), and the like. Currently, event types in an LTE system include an event A1 in which a trigger quantity of a serving cell is greater than a threshold, an event A2 in which a trigger quantity of a serving cell is less than a threshold, an event A3 in which a trigger quantity of a neighboring cell is better than a trigger quantity of a primary cell (primary cell, PCell)/a primary secondary cell (primary secondary cell, PSCell) after an offset is considered, an event A4 in which a trigger quantity of a neighboring cell is greater than a threshold, an event A5 in which a trigger quantity of a serving cell is less than a first threshold, and a trigger quantity of a neighboring cell is greater than a second threshold, and an event A6 in which a trigger quantity of a neighboring cell is better than a trigger quantity of a secondary cell (secondary cell, SCell) after an offset is considered. If a reporting manner is periodically triggered reporting, the measurement parameter further includes a reporting period, a purpose of periodically triggering, and the like.

Measurement identity: A measurement identity is a combination of a measurement object and a reporting configuration, and the two are combined to determine various details of measurement on the measurement object. For example, this is shown in FIG. 2.

Measurement quantity configuration: Before reporting a measurement result, the terminal device first performs layer 3 filtering on a trigger quantity. The measurement quantity configuration means a configuration of a layer 3 filtering coefficient.

Measurement gap configuration: When measurement and data transmission cannot be performed at the same time, a network needs to configure a measurement gap for measurement.

After sending measurement configuration information to the terminal device for the first time, the network device may further configure a new MO for the terminal device, or may enable the terminal device to reconfigure a current MO. Specifically, the network device may add measurement configuration information (measConfig) to a radio resource control reconfiguration (RRCReconfiguration) message, where measConfig includes measObjectToAddModList, measObjectToAddModList includes one or more MeasObjectToAddMods, and each MeasObjectToAddMod includes one measObjectId, namely, an ID of an MO. If the terminal device already has an MO corresponding to the ID, the terminal device reconfigures the MO; otherwise, the terminal device adds a new MO.

Each time the terminal device reconfigures an existing MO, the terminal device clears a measurement reporting entry associated with the MO, stops a corresponding timer, and resets related information (for example, timeToTrigger).

After sending the measurement configuration information to the terminal device for the first time, the network device may further configure new reportConfig for the terminal device, or may enable the terminal device to reconfigure current reportConfig. The network device adds measConfig to an RRCReconfiguration message, measConfig includes reportConfigToAddModList, reportConfigToAddModList includes one or more ReportConfigToAddMods, and each ReportConfigToAddMod includes one reportConfigId, namely, an ID of a reporting configuration. If the terminal device already has reportConfig corresponding to the ID, the terminal device reconfigures reportConfig; otherwise, the terminal device adds new reportConfig.

Each time the terminal device reconfigures existing reportConfig, the terminal device clears a measurement reporting entry associated with reportConfig, stops a corresponding timer, and resets related information (for example, timeToTrigger).

However, in some scenarios, it is desirable to clear associated measurement reporting entries, while in some scenarios it is not desirable to clear the associated measurement reporting entries. For example, an MO includes both a measurement parameter of an SSB and a measurement parameter of a CSI-RS. If only the measurement parameter of the SSB is reconfigured, it is not desirable to affect reporting of a measurement reporting entry corresponding to the CSI-RS. Similarly, if only the measurement parameter of the CSI-RS is reconfigured, it is not desirable to affect reporting of a measurement reporting entry corresponding to the SSB. For another example, timing of a synchronization signal/physical broadcast channel block measurement timing configuration (SS/PBCH Block measurement timing configuration, SMTC) is related to an SpCell, and the SpCell may be a primary cell (primary Cell, PCell) or a primary secondary cell (primary secondary cell, PSCell). When SMTC timing changes after handover, the terminal device may continue to measure a neighboring cell. Therefore, when the network device reconfigures an SMTC configuration in the MO, it is not desirable to clear a measurement reporting entry. For another example, after some parameters in the MO are reconfigured, reporting of cells that meet conditions is further triggered even if reporting of the current measurement reporting entry is cleared. Therefore, in this case, it is not desirable to clear measurement reporting.

Based on this, the embodiments of this application provide a measurement reporting entry processing method and apparatus, so that the terminal device can flexibly process a measurement reporting entry under an indication of the network device, to retain useful measurement reporting entries in measurement reporting entries. The method and the apparatus are based on a same inventive concept. Because problem-resolving principles of the method and the apparatus are similar, apparatus implementation and method implementation may be mutually referenced. Repeated parts are not described.

It should be noted that, in the embodiments of this application, "a plurality of' refers to two or more than two. The term "and/or" describes an association relationship for describing associated objects and represents that three relationships may exist. For example, A and/or B may represent the following three cases: Only A exists, both A and B exist, and only B exists. The character "/" generally indicates an "or" relationship between the associated objects. In addition, it should be understood that in the description of the embodiments of this application, the words "first", "second", and the like are merely used for distinction description, and shall not be understood as an indication or implication of relative importance or an indication or implication of an order.

In this embodiment of this application, "clearing a measurement reporting entry" and "affecting reporting of a measurement reporting entry" may be understood as a same execution action. For example, "clearing a measurement reporting entry" when a measurement parameter of an MO is reconfigured may mean clearing a measurement reporting entry related to the MO when the measurement parameter of the MO is reconfigured. When a measurement parameter of an MO is reconfigured, "affecting reporting of a measurement reporting entry" may also mean clearing a measurement reporting entry related to the MO when the measurement parameter of the MO is reconfigured.

In the embodiments of this application, a beam (beam) may be understood as a spatial resource, and may be a transmit or receive precoding vector having an energy transmission directivity. In addition, the transmit or receive precoding vector can be identified by using index information, and the index information may correspond to a resource identity (identity, ID) of a configured terminal. For example, the index information may be an identity or a resource corresponding to a configured CSI-RS, or may be an identity or a resource corresponding to a configured uplink sounding reference signal (sounding reference signal, SRS). Optionally, the index information may be index information explicitly or implicitly carried by a signal or a channel carried in a beam. The energy transmission directivity may mean that precoding processing is performed, by using the precoding vector, on a signal that needs to be sent. A signal obtained after the precoding processing has a specific spatial directivity. The signal that is received and on which precoding processing is performed by using the precoding vector has relatively high receive power, for example, satisfies a receive demodulation signal-to-noise ratio. The energy transmission directivity may also mean that a same signal that is sent at different spatial locations and that is received by using the precoding vector has different receive power. Optionally, a same communications apparatus (such as a terminal device or a network device) may have different precoding vectors, and different devices may also have different precoding vectors, in other words, correspond to different beams. For a configuration or a capability of a communications apparatus, one communications apparatus may use one or more of a plurality of different precoding vectors at a same moment, in other words, one or more beams may be formed at the same time. In this application, a beam sent by the network device to the terminal device is referred to as a downlink beam, and a beam sent by the terminal device to the network device is referred to as an uplink beam. A beam may be configured by using RRC, an SSB is sent to UE by using a broadcast message, and a CSI-RS may be configured for the UE by using radio resource control (radio resource control, RRC) dedicated signaling. The SSB and the CSI-RS are respectively configured with two thresholds (rsrp-ThresholdSSB and csirs-Threshold), and the two thresholds are used by the UE to select a beam. A network side may configure measurement information based on the SSB or the CSI-RS for the UE, and the UE measures an SSB reference signal received power (synchronization signal block reference signal received power, SSB-RSRP) or a CSI reference signal received power (channel state information reference signal received power, CSI-RSRP). When SSB-RSRP signal quality of the UE exceeds an RSRP threshold of the SSB, the UE selects a preamble (preamble) sequence of the corresponding SSB to perform random access.

The following specifically describes a measurement reporting entry processing method provided in this application with reference to the accompanying drawings.

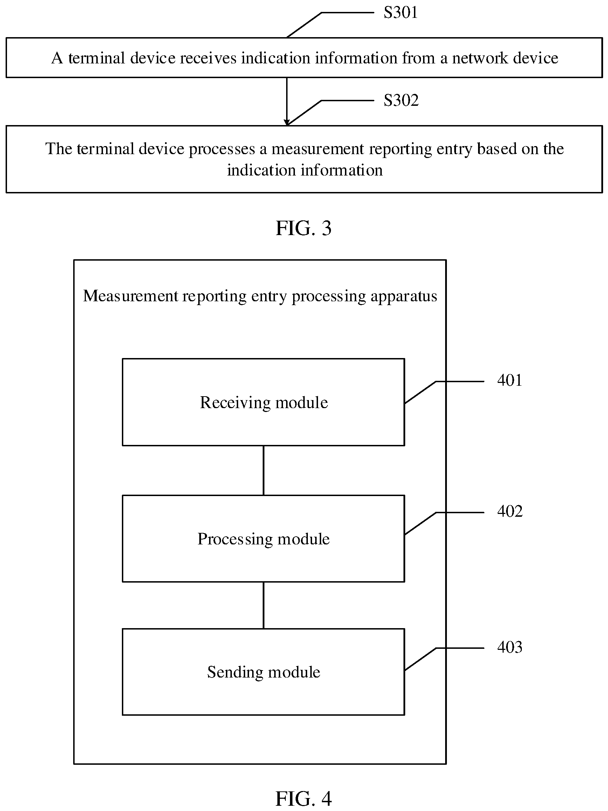

FIG. 3 is a flowchart of a measurement reporting entry processing method according to this application. The measurement reporting entry processing method provided in this application may be applied to a terminal device, a chip, a chipset, a function module that performs the method in a chip, or the like. The following uses the terminal device as an example for description. The method includes the following steps:
S301. The terminal device receives indication information from a network device, where the indication information is used to indicate a processing manner of a measurement reporting entry.
S302. The terminal device processes the measurement reporting entry based on the indication information.

Measurement configuration information includes a measurement identity. A measurement identity is a combination of a measurement object and a reporting configuration, and the two are combined to determine various details of measurement on the measurement object. If a measurement object and a reporting configuration associated with a measurement identity are considered as a measurement task, a measurement result of the measurement task is reported by carrying the measurement identity. For event triggered reporting, when one or more cells meet a trigger condition, the UE generates a measurement reporting entry (measurement reporting entry) corresponding to the measurement identity. For periodically triggered reporting, when obtaining a first measurement result, the UE generates a measurement reporting entry corresponding to the measurement identity. For CGI reporting, when the UE obtains related system information of a corresponding cell or when the UE determines that the related system information of the corresponding cell cannot be obtained, the UE generates a measurement reporting entry corresponding to the measurement identity.

In a possible implementation, the indication information sent by the network device to the terminal device may be valid only for a current measurement configuration, to be specific, the indication information may carry a Need N field. For example, the network device may add indication information to measurement configuration information sent each time, so that after receiving the measurement configuration information, the terminal device may process an associated measurement reporting entry based on the indication information carried in the measurement configuration information. The Need N field is defined in v15.2.1 in 38.331. Need N means no action, namely, a one-shot configuration that is not maintained, and Need N indicates that the terminal device performs a one-shot action. Therefore, if the indication message carries the Need N field, it indicates that the indication message is valid only for a current measurement configuration.

In another possible implementation, the indication information sent by the network device to the terminal device may also be valid until new indication information is sent. In other words, the indication information may be semi-statically configured, or the indication information may carry a Need M field. For example, after receiving the indication information, the terminal device processes a measurement reporting entry based on the indication information after receiving the measurement configuration information, until indication information retransmitted by the network device is received. The Need M field is also defined in v15.2.1 in 38.331. Need M means maintaining, in other words, not one-shot. Therefore, if the indication message carries the Need M field, it indicates that the indication message is always valid until a new indication message is received.

The indication information may alternatively be set to optional (optional), in other words, the network device may send the indication information, or may not send the indication information. When the network device does not send the indication information, the terminal device may clear an associated measurement reporting entry when reconfiguring the measurement configuration information. When the network device sends the indication information, the terminal device may not clear the associated measurement reporting entry when reconfiguring the measurement configuration information. Alternatively, when the network device does not send the indication information, the terminal device may not clear the associated measurement reporting entry when reconfiguring the measurement configuration information. When the network device sends the indication information, the terminal device may clear the associated measurement reporting entry when reconfiguring the measurement configuration information.

In this embodiment of this application, the network device sends the indication information to the terminal device to indicate the processing manner of the measurement reporting entry. Therefore, when reconfiguring the measurement configuration information, the terminal device may retain a useful measurement reporting entry in measurement reporting entries. After some measurement reporting entries in the measurement reporting entries are deleted, a related cell triggers measurement reporting again. Therefore, the terminal device retains useful measurement reporting entries in the measurement reporting entries under an indication of the network device, a case in which measurement reporting is triggered again due to deletion of the useful measurement reporting entries can be avoided, and further an increase in signaling used for measurement reporting by the terminal device caused by the deletion of the useful measurement reporting entries can be reduced. In addition, in this embodiment of this application, the processing manner of the measurement reporting entry may be determined as required, so that flexibility can be improved.

The indication information in this embodiment of this application may occupy one bit. TRUE may be used to indicate to clear, and FALSE may be used to indicate not to clear. Certainly, TRUE may alternatively be used to indicate not to clear, and FALSE may be used to indicate to clear. This bit may be set to 0 to indicate TRUE, and set to 1 to indicate FALSE. Alternatively, the bit being 1 may be used to indicate TRUE and the bit being 0 may be used to indicate FALSE. Alternatively, when the indication information is carried, it indicates to clear, and when the indication information is not ca rried, it indicates not to clear. Alternatively, when the indication is not carried, it indicates to clear, and when the indication is carried, it indicates not to clear. Certainly, the indication information may alternatively be in another form. This is not specifically limited herein. For ease of description, an example in which TRUE indicates not to clear and FALSE indicates to clear is used for description below.

In an implementation, that the terminal device receives the indication information sent from the network device may be implemented in the following manner: The terminal device receives first indication information and second indication information from the network device, where the first indication information is used to indicate whether to clear a measurement reporting entry corresponding to a first reference signal, and the second indication information is used to indicate whether to clear a measurement reporting entry corresponding to a second reference signal.

In this embodiment of this application, "a measurement reporting entry corresponding to a first reference signal" may mean that in a reporting configuration associated with a measurement identity corresponding to the measurement reporting entry, a reference signal type is set to the first reference signal. Similarly, "a measurement reporting entry corresponding to a second reference signal" may mean that in a reporting configuration associated with a measurement identity corresponding to the measurement reporting entry, a reference signal type is set to the second reference signal. The first reference signal may be an SSB, and the second reference signal may be a CSI-RS. Alternatively, the first reference signal may be a CSI-RS, and the second reference signal may be an SSB. Alternatively, the first reference signal and the second reference signal may be other reference signals. This is not specifically limited herein. For ease of description, an example in which the first reference signal is an SSB and the second reference signal is a CSI-RS is used for description below. If the first reference signal is an SSB, "a measurement reporting entry corresponding to the SSB" may mean that in a reporting configuration associated with a measurement identity corresponding to the measurement reporting entry, a reference signal type is set to an SSB. If the second reference signal is a CSI-RS, "a measurement reporting entry corresponding to the CSI-RS" may mean that in a reporting configuration associated with a measurement identity corresponding to the measurement reporting entry, a reference signal type is set to a CSI-RS.

In an implementation, the network device may add the first indication information and the second indication information to the measurement configuration information. Therefore, the terminal device may receive the first indication information and the second indication information when receiving the measurement configuration information from the network device. When adding the first indication information and the second indication information to the measurement configuration information, the network device may add the first indication information and the second indication information to measConfig, or to an RRC reconfiguration (RRCReconfiguration) message including measConfig.

The first indication information and the second indication information may be valid for both an MO and a reporting configuration in measConfig. To be specific, when a measurement parameter of any MO is reconfigured, a measurement reporting entry associated with the MO may be processed based on the first indication information and the second indication information, and when a measurement parameter of any reporting configuration is reconfigured, a measurement reporting entry associated with the reporting configuration may be processed based on the first indication information and the second indication information.

For example, the first indication information indicates to clear a measurement reporting entry corresponding to an SSB, and the second indication information indicates not to clear a measurement reporting entry corresponding to a CSI-RS. The network device sends measConfig to the terminal device, where measConfig carries the first indication information and the second indication information, and further includes measurement parameters of an MO 1. Compared with that in measurement parameters of the MO 1 that are stored in the terminal device, a measurement parameter of an SSB in the measurement parameters of the MO 1 in measConfig changes. Therefore, after receiving measConfig, the terminal device processes, based on the first indication information, a measurement reporting entry whose reference signal is an SSB in measurement reporting entries associated with the MO 1, to be specific, a measurement reporting entry whose reference signal is an SSB in the measurement reporting entries associated with the MO 1 is cleared, and processes, based on the second indication information, a measurement reporting entry whose reference signal is a CSI-RS in the measurement reporting entries associated with the MO 1, to be specific, a measurement reporting entry whose reference signal is a CSI-RS in the measurement reporting entries associated with the MO 1 is not cleared.

For example, the first indication information indicates to clear a measurement reporting entry corresponding to an SSB, and the second indication information indicates not to clear a measurement reporting entry corresponding to a CSI-RS. The network device sends measConfig to the terminal device, where measConfig carries the first indication information and the second indication information, and further includes a measurement parameter of a reporting configuration 1. The measurement parameter of the reporting configuration 1 in measConfig changes compared with a measurement parameter of the reporting configuration 1 stored in the terminal device. Therefore, after the terminal device receives measConfig, if a reference signal type included in the reporting configuration 1 is an SSB, each measurement reporting entry associated with the reporting configuration 1 is processed based on the first indication information, to be specific, each measurement reporting entry associated with the reporting configuration 1 is cleared. If a reference signal type included in the reporting configuration 1 is a CSI-RS, each measurement reporting entry associated with the reporting configuration 1 is processed based on the second indication information, to be specific, each measurement reporting entry associated with the reporting configuration 1 is not cleared.

The first indication information and the second indication information may also be valid only for an MO in measConfig. To be specific, when a measurement parameter of any MO is reconfigured, a measurement reporting entry associated with the MO may be processed based on the first indication information and the second indication information. Alternatively, the first indication information and the second indication information may also be valid only for a reporting configuration in measConfig. To be specific, when a measurement parameter of any reporting configuration is reconfigured, a measurement reporting entry associated with the reporting configuration may be processed based on the first indication information and the second indication information.

In another implementation, the network device may add the first indication information and the second indication information to a measurement object of the measurement configuration information. In addition to the first indication information and the second indication information, the measurement object of the measurement configuration information may further include other parameters, which are not listed one by one herein. Therefore, the terminal device may receive the first indication information and the second indication information when receiving the measurement object of the measurement configuration information from the network device. The first indication information and the second indication information are valid only for the measurement object. Therefore, when a measurement parameter of the measurement object is reconfigured, a measurement reporting entry that is associated with the measurement object and whose reference signal in an associated reporting configuration is an SSB may be processed based on the first indication information. The associated reporting configuration may be a reporting configuration associated with a measurement identity associated with the measurement object. FIG. 2 is used as an example, an associated reporting configuration of the MO 1 includes the reporting configuration 1, an associated reporting configuration of an MO 2 includes the reporting configuration 1 and a reporting configuration 2, and an associated reporting configuration of an MO 4 includes a reporting configuration 4. A measurement reporting entry that is associated with the measurement object and whose reference signal in the associated reporting configuration is a CSI-RS is processed based on the second indication information. When reconfiguring a measurement parameter corresponding to an SSB in an MO, the network device may set the first indication information to FALSE, and set the second indication information to TRUE. When reconfiguring a measurement parameter corresponding to a CSI-RS in an MO, the network device may set the first indication information to TRUE, and set the second indication information to FALSE. When reconfiguring measurement parameters corresponding to an SSB and a CSI-RS in an MO, the network device may set both the first indication information and the second indication information to FALSE.

Alternatively, in an NR system, there may be a plurality of locations at which the SSB may be sent in time domain. However, a location at which the network device starts to send a first OS of the SSB is internal implementation of the network device, and cannot be determined by the terminal device. To avoid high power consumption caused by unnecessary search of the terminal device, a concept of an SMTC is introduced in the NR system. The SMTC is a window configured by a network side device for the terminal device and used to perform SSB measurement. The terminal device only needs to perform SSB measurement in an SMTC window, and does not need to perform SSB measurement outside the window. SMTC timing is based on an SpCell, where the SpCell may be a PCell or a PSCell. When the terminal device is handed over from a cell 1 to a cell 2, a reference of SMTC timing of the terminal device changes. To continue a related measurement task including an SMTC configuration, the network device may configure a new SMTC configuration for the UE. For example, the terminal device is handed over from the cell 1 to the cell 2. In a handover execution process, the source cell cell 1 sends an RRCReconfiguration message to the terminal device, where the RRCReconfiguration message carries a measurement configuration, the measurement configuration includes configurations of one or more MOs, and the configurations of the MOs may carry SMTCs. It is assumed that a first MO is included, and the network reconfigures an SMTC configuration in the first MO. In this case, it is not desirable to affect reporting of existing measurement results of SSBs and CSI-RSs. Therefore, when reconfiguring an SMTC parameter in an MO, the network device may set both the first indication information and the second indication information to TRUE.

Alternatively, when a serving cell changes, measurement result reporting for some events related to the serving cell, such as an event A1, an event A2, an event A3, and an event A5, may be stopped. For example, if a serving cell cell 1 configures a second MO for the terminal device, the second MO is associated with the event A3, and a neighboring cell cell 2 corresponding to the second MO triggers the event A3, the network device determines to hand over the terminal device to the cell 2. In this case, if the network device reconfigures the second MO, a measurement reporting entry associated with the second MO may be cleared. Therefore, if the network device reconfigures an MO because cell handover is performed on the terminal device, both the first indication information and the second indication information carried in the MO may be set to FALSE.

Alternatively, when cell handover or PSCell/SCell addition of the terminal device is completed, an event that is periodically reported and that is triggered by an original related neighboring cell, such as an event A4 or A6, may not be reported. For example, if the serving cell cell 1 configures a third MO for the terminal device, the third MO is associated with the event A4, and a neighboring cell cell 2 corresponding to the third MO triggers the event A3, the network adds the cell 2 as the SCell. In this case, if the network reconfigures the third MO, a measurement reporting entry associated with the third MO may be cleared. Therefore, if the network device reconfigures an MO because cell handover or PSCell/SCell addition is performed on the terminal device, both the first indication information and the second indication information carried in the MO may be set to FALSE.

Alternatively, when the network device reconfigures some parameters in an MO, for example, some parameters of smtc2 in the MO, reporting of cells that meet conditions is further triggered even if reporting of a current measurement result is stopped. Therefore, in this case, it is not desirable to clear measurement reporting. For example, the network device configures a fourth MO for the terminal device, and the terminal device performs measurement based on the fourth MO and a plurality of reportConfigs associated with the fourth MO, and obtains some SSB-based measurement reporting entries and CSI-RS-based measurement reporting entries. In this case, if the network device needs to reconfigure some parameters in the fourth MO, for example, reconfigure some parameters of smtc2, where smtc2 is used only for serving cell measurement in this case, and smtc1 is used for neighboring cell measurement, it is unnecessary to clear existing measurement reporting entries. Therefore, when reconfiguring parameters such as smtc2 of an MO, the network device may set both the first indication information and the second indication information carried in the MO to TRUE.

When the network device reconfigures a parameter such as a consolidation threshold in the MO, it is desirable to clear a corresponding measurement reporting entry. For example, when reconfiguring absThreshSS-BlocksConsolidation in the MO, the network device expects the terminal device to clear an SSB-related measurement reporting entry, and when reconfiguring absThreshCSI-RS-Consolidation in the MO, the network device expects the terminal device to clear a CSI-RS-related measurement reporting entry. absThreshSS-BlocksConsolidation is an SSB beam threshold, and absThreshCSI-RS-Consolidation is a CSI-RS beam threshold. Therefore, when reconfiguring an absThreshSS-BlocksConsolidation parameter in an MO, the network device may set the first indication information to FALSE, and set the second indication information to TRUE. When reconfiguring an absThreshCSI-RS-Consolidation parameter in an MO, the network device may set the first indication information to TRUE, and set the second indication information to FALSE.

For example, the network device sends measConfig to the terminal device, where measConfig includes measurement parameters of an MO 2. Compared with that in measurement parameters of the MO 2 that are stored in the terminal device, a measurement parameter of an SSB in the measurement parameters of the MO 2 measConfig changes. The network device may add first indication information and second indication information to the MO 2. The first indication information may indicate to clear a measurement reporting entry corresponding to an SSB, and the second indication information indicates not to clear a measurement reporting entry corresponding to a CSI-RS. In other words, the first indication information carried in the MO 2 may be set to FALSE and the second indication information may be set to TRUE. Therefore, after receiving measConfig, the terminal device processes, based on the first indication information, a measurement reporting entry whose reference signal is an SSB in measurement reporting entries associated with the MO 2, to be specific, a measurement reporting entry whose reference signal is an SSB in the measurement reporting entries associated with the MO 2 is cleared, and processes, based on the second indication information, a measurement reporting entry whose reference signal is a CSI-RS in the measurement reporting entries associated with the MO 2, to be specific, a measurement reporting entry whose reference signal is a CSI-RS in the measurement reporting entries associated with the MO 2 is not cleared.

In another implementation, the network device may add the first indication information and the second indication information to a reporting configuration of the measurement configuration information. In addition to the first indication information and the second indication information, the reporting configuration of the measurement configuration information may further include other parameters, which are not listed one by one herein. Therefore, the terminal device may receive the first indication information and the second indication information when receiving the reporting configuration of the measurement configuration information from the network device. The first indication information and the second indication information are valid only for the reporting configuration. Therefore, when the measurement parameter of the reporting configuration is reconfigured, a measurement reporting entry that is associated with the reporting configuration and whose reference signal in an associated reporting configuration is an SSB may be processed based on the first indication information. A measurement reporting entry that is associated with the reporting configuration and whose reference signal in the associated reporting configuration is a CSI-RS is processed based on the second indication information.

When parameters such as an event threshold in reportConfig are reconfigured, measurement reporting entries can be cleared. Therefore, when reconfiguring the parameters such as the event threshold in reportConfig, the network device may set the first indication information and the second indication information carried in the reportConfig to FALSE.

The network device sends the measurement configuration information to the terminal device, and the measurement configuration information includes one or more reportConfig configurations, and each reportConfig includes an indication to indicate whether to clear a measurement reporting entry when a parameter in reportConfig is reconfigured.

For example, the network device sends measConfig to the terminal device, where measConfig includes a measurement parameter of a reporting configuration 2, and the reporting configuration 2 carries the first indication information and the second indication information. The measurement parameter of the reporting configuration 2 in measConfig changes compared with the measurement parameter of the reporting configuration 2 stored in the terminal device. If a reference signal type in the reporting configuration 2 is an SSB, the terminal device may process, based on the first indication information carried in the reporting configuration 2, a measurement reporting entry associated with the reporting configuration 2. If the first indication information indicates to clear a measurement reporting entry corresponding to the SSB, after receiving measConfig, the terminal device processes, based on the first indication information, each measurement reporting entry associated with the reporting configuration 2, to be specific, clears each measurement reporting entry associated with the reporting configuration 2. If the first indication information indicates not to clear the measurement reporting entry corresponding to the SSB, after receiving measConfig, the terminal device processes, based on the first indication information, each measurement reporting entry associated with the reporting configuration 2, to be specific, does not clear each measurement reporting entry associated with the reporting configuration 2. Similarly, if the reference signal type in the reporting configuration 2 is a CSI-RS, the terminal device may process, in the second indication information carried in the reporting configuration 2, a measurement reporting entry associated with the reporting configuration 2. If the second indication information indicates to clear a measurement reporting entry corresponding to the CSI-RS, after receiving measConfig, the terminal device processes, based on the second indication information, each measurement reporting entry associated with the reporting configuration 2, to be specific, clears each measurement reporting entry associated with the reporting configuration 2. If the second indication information indicates not to clear the measurement reporting entry corresponding to the CSI-RS, after receiving measConfig, the terminal device processes, based on the second indication information, each measurement reporting entry associated with the reporting configuration 2, to be specific, does not clear each measurement reporting entry associated with the reporting configuration 2.

In another implementation, that the terminal device receives the indication information sent from the network device may be implemented in the following manner: The terminal device receives third indication information from the network device, where the third indication information is used to indicate whether to clear the measurement reporting entry. Alternatively, the third indication information may be used to indicate whether to clear a measurement reporting entry whose reference signal is an SSB. Alternatively, the third indication information may be used to indicate whether to clear a measurement reporting entry whose reference signal is a CSI-RS.

In an implementation, the network device may add the third indication information to the measurement configuration information. Therefore, the terminal device may receive the third indication information when receiving the measurement configuration information from the network device. When the network device adds the third indication information to the measurement configuration information, the third indication information may be carried in measConfig, or may be carried in an RRCReconfiguration message including measConfig. The third indication information may be valid for both an MO and a reporting configuration in measConfig. To be specific, when a measurement parameter of any MO is reconfigured, a measurement reporting entry associated with the MO may be processed based on the third indication information, and when a measurement parameter of any reporting configuration is reconfigured, a measurement reporting entry associated with the reporting configuration may be processed based on the third indication information.

For example, the third indication information indicates to clear the measurement reporting entry. The network device sends measConfig to the terminal device, where measConfig carries the third indication information and further includes a measurement parameter of an MO 3. Compared with the measurement parameter of the MO 3 stored in the terminal device, the measurement parameter of the MO 3 in measConfig changes. Therefore, after receiving measConfig, the terminal device processes, based on the third indication information, each measurement reporting entry associated with the MO 3, to be specific, clears each measurement reporting entry associated with the MO 3.

For example, the third indication information indicates to clear the measurement reporting entry. The network device sends measConfig to the terminal device, where measConfig carries the third indication information and further includes a measurement parameter of a reporting configuration 3. The measurement parameter of the reporting configuration 3 in measConfig changes compared with the measurement parameter of the reporting configuration 3 stored in the terminal device. Therefore, after receiving measConfig, the terminal device processes, based on the third indication information, each measurement reporting entry associated with the reporting configuration 3, to be specific, clears each measurement reporting entry associated with the reporting configuration 3.

Alternatively, the third indication information may be valid only for an MO in measConfig. To be specific, when a measurement parameter of any MO is reconfigured, a measurement reporting entry associated with the MO may be processed based on the third indication information. Alternatively, the third indication information may be valid only for a reporting configuration in measConfig. To be specific, when a measurement parameter of any reporting configuration is reconfigured, a measurement reporting entry associated with the reporting configuration may be processed based on the third indication information.

In another implementation, the network device may add the third indication information to a measurement object of the measurement configuration information. In addition to the third indication information, the measurement object of the measurement configuration information may further include parameters, which are not listed one by one herein. Therefore, the terminal device may receive the third indication information when receiving the measurement object of the measurement configuration information from the network device. The third indication information is valid only for the measurement object. Therefore, when a measurement parameter of the measurement object is reconfigured, a measurement reporting entry associated with the measurement object may be processed based on the third indication information.

If the network device reconfigures an SMTC configuration in the MO, it is not desirable to affect reporting of measurement results of an existing SSB and a CSI-RS. Therefore, the network device may set the third indication information carried in the MO to TRUE.

When a serving cell changes, measurement result reporting for some events related to the serving cell, such as an event A1, an event A2, an event A3, and an event A5, may be stopped. For example, if a serving cell cell 1 configures a second MO for the terminal device, the second MO is associated with the event A3, and a neighboring cell cell 2 corresponding to the second MO triggers the event A3, the network device determines to hand over the terminal device to the cell 2. In this case, if the network device reconfigures the second MO, a measurement reporting entry associated with the second MO may be cleared. Therefore, if the network device reconfigures an MO because cell handover is performed on the terminal device, the third indication information carried in the MO may be set to FALSE.

When cell handover or PSCell/SCell addition of the terminal device is completed, an event that is periodically reported and that is triggered by an original related neighboring cell, such as an event A4 or A6, may not be reported. For example, if the serving cell cell 1 configures a third MO for the terminal device, the third MO is associated with the event A4, and a neighboring cell cell 2 corresponding to the third MO triggers the event A3, the network adds the cell 2 as the SCell. In this case, if the network device reconfigures the third MO, a measurement reporting entry associated with the third MO may be cleared. Therefore, if the network device reconfigures an MO because cell handover or PSCell/SCell addition is performed on the terminal device, the third indication information carried in the MO may be set to FALSE.

When the network device reconfigures some parameters in an MO, for example, some parameters of smtc2 in the MO, reporting of cells that meet conditions is further triggered even if reporting of a current measurement result is stopped. Therefore, in this case, it may not be desirable to clear measurement reporting. For example, the network device configures a fourth MO for the terminal device, and the terminal device performs measurement based on the fourth MO and a plurality of reportConfigs associated with the fourth MO, and obtains some SSB-based measurement reporting entries and CSI-RS-based measurement reporting entries. In this case, if the network device needs to reconfigure some parameters in the fourth MO, for example, reconfigure some parameters of smtc2, where smtc2 is used only for serving cell measurement in this case, and smtc1 is used for neighboring cell measurement, it is unnecessary to clear existing measurement reporting entries. Therefore, when reconfiguring parameters such as smtc2 of an MO, the network device may set both the first indication information and the second indication information carried in the MO to TRUE.

For example, the network device sends measConfig to the terminal device, where measConfig includes a measurement parameter of an MO 4. The measurement parameter of the MO 4 in measConfig changes compared with the measurement parameter of the MO 4 stored in the terminal device. The network device may add the third indication information to the MO 4. If the third indication information may indicate to clear a measurement reporting entry, after receiving measConfig, the terminal device processes, based on the third indication information, each measurement reporting entry associated with the MO 4, to be specific, clears each measurement reporting entry associated with the MO 4. If the third indication information may indicate not to clear a measurement reporting entry, after receiving measConfig, the terminal device processes, based on the third indication information, each measurement reporting entry associated with the MO 4, to be specific, does not clear each measurement reporting entry associated with the MO 4.

In another implementation, the network device may add the third indication information to a reporting configuration of the measurement configuration information. In addition to the third indication information, the reporting configuration of the measurement configuration may further include parameters, which are not listed one by one herein. Therefore, the terminal device may receive the third indication information when receiving the reporting configuration of the measurement configuration information from the network device. The third indication information is valid only for the reporting configuration. Therefore, when a measurement parameter of the reporting configuration is reconfigured, a measurement reporting entry associated with the reporting configuration may be processed based on the third indication information.

If it is desirable for the network device to retain a measurement reporting entry whose reference signal is a CSI-RS, when reconfiguring some measurement parameters in a reporting configuration whose reference signal is a CSI-RS, the network device may set the third indication information carried in the reporting configuration to TRUE; or if it is not desirable for the network device to retain a measurement reporting entry whose reference signal is a CSI-RS, when reconfiguring some measurement parameters in a reporting configuration whose reference signal is a CSI-RS, the network device may set the third indication information carried in the reporting configuration to FALSE. Similarly, if it is desirable for the network device to retain a measurement reporting entry whose reference signal is an SSB, when reconfiguring some measurement parameters in a reporting configuration whose reference signal is an SSB, the network device may set the third indication information carried in the reporting configuration to TRUE, or if it is not desirable for the network device to retain a measurement reporting entry whose reference signal is an SSB, when reconfiguring some measurement parameters in a reporting configuration whose reference signal is an SSB, the network device may set the third indication information carried in the reporting configuration to FALSE.

When reconfiguring parameters such as an event threshold in reportConfig, the terminal device may clear measurement reporting entries. Therefore, when reconfiguring the parameters such as the event threshold in reportConfig, the network device may set the third indication information carried in reportConfig to FALSE.

For example, the network device sends measConfig to the terminal device, where measConfig includes a measurement parameter of a reporting configuration 4. The measurement parameter of the reporting configuration 4 in measConfig changes compared with the measurement parameter of the reporting configuration 4 stored in the terminal device. The network device may add the third indication information to the reporting configuration 4. If the third indication information indicates to clear a measurement reporting entry, after receiving measConfig, the terminal device processes, based on the third indication information, each measurement reporting entry associated with the reporting configuration 4, to be specific, clears each measurement reporting entry associated with the reporting configuration 4. If the third indication information indicates not to clear a measurement reporting entry, after receiving measConfig, the terminal device processes, based on the third indication information, each measurement reporting entry associated with the reporting configuration 4, to be specific, does not clear each measurement reporting entry associated with the reporting configuration 4.

In this embodiment of this application, when clearing a measurement reporting entry, the terminal device may further stop a timer related to a measurement identity associated with the measurement reporting entry, for example, a periodical reporting timer (Periodical reporting timer) or T321. When clearing a measurement reporting entry, the terminal device may further reset a parameter related to the measurement identity associated with the measurement reporting entry, for example, event-trigger duration (timeToTrigger).

The terminal device may report capability information to the network device, where the capability information is used to indicate the network device whether the terminal device supports processing, under an indication of the network device, the measurement reporting entry. For example, the network device requests the terminal device to report a capability by using a terminal capability request (UECapabilityEnquiry) message, and the terminal device may report capability information of the terminal device by using a terminal device capability information (UECapabilityInformation) message.

In another possible implementation, when receiving the measurement configuration information, the terminal device may also process a measurement reporting entry according to a preset rule.

For example, the preset rule may be that the terminal device clears a measurement reporting entry when a specific parameter is reconfigured. Therefore, when receiving the measurement configuration information from the network device, the terminal device may determine whether a specific parameter needs to be reconfigured, and if the specific parameter needs to be reconfigured, the terminal device clears reporting of a measurement reporting entry; otherwise, the terminal device does not clear reporting of a measurement reporting entry. For example, it may be pre-specified that an event threshold in reportConfig affects reporting of measurement reporting entries. The terminal device receives the measurement configuration information from the network device, where the measurement configuration information includes a reporting configuration 5, and compared with that in a measurement parameter of the reporting configuration 5 stored in the terminal device, an event threshold changes in the reporting configuration 5 in the measurement configuration information, in other words, the terminal device needs to reconfigure the event threshold of the reporting configuration 5. The terminal device may clear, according to a preset rule, each measurement reporting entry associated with the reporting configuration 5.

For another example, a parameter whose reconfiguration affects a measurement reporting entry whose reference signal is a CSI-RS may be further pre-specified, and a parameter whose reconfiguration affects a measurement reporting entry whose reference signal is an SSB may also be pre-specified. In other words, the preset rule may be that the terminal device clears a measurement reporting entry whose reference signal is a CSI-RS when reconfiguring a first specific parameter, and/or the terminal device clears a measurement reporting entry whose reference signal is an SSB when reconfiguring a second specific parameter. For example, it may be pre-specified that an absThreshSS-BlocksConsolidation threshold in an MO affects a measurement reporting entry whose reference signal is an SSB. The terminal device receives the measurement configuration information from the network device, where the measurement configuration information includes an MO 5, and compared with that in a measurement parameter of the MO 5 stored in the terminal device, absThreshSS-BlocksConsolidation changes in the measurement parameter of the measurement configuration information of the MO 5, in other words, the terminal device needs to reconfigure absThreshSS-BlocksConsolidation of the MO 5. The terminal device may clear, based on the preset rule, a measurement reporting entry whose reference signal is an SSB in each measurement reporting entry associated with the MO 5.

For another example, the preset rule may be that the terminal device does not clear a measurement reporting entry when reconfiguring some specific parameters. Therefore, when receiving the measurement configuration information from the network device, the terminal device may determine whether a specific parameter needs to be reconfigured, and if the specific parameter needs to be reconfigured, the terminal device does not clear reporting of a measurement reporting entry; otherwise, the terminal device clears reporting of a measurement reporting entry. For example, it may be pre-specified that an SMTC parameter in an MO does not affect a measurement reporting entry. The terminal device receives the measurement configuration information from the network device, where the measurement configuration information includes an MO 6, and compared with that in a measurement parameter of the MO 6 stored in the terminal device, an SMTC in the measurement parameter of the MO 6 in the measurement configuration information changes, in other words, the terminal device needs to reconfigure the SMTC of the MO 6. The terminal device may not clear, based on a preset rule, each measurement reporting entry associated with the MO 6.

For another example, a parameter whose reconfiguration does not affect a measurement reporting entry whose reference signal is a CSI-RS may be further pre-specified, and a parameter whose reconfiguration does not affect a measurement reporting entry whose reference signal is an SSB may also be pre-specified. In other words, the preset rule may be that the terminal device does not clear a measurement reporting entry whose reference signal is a CSI-RS when reconfiguring a third specific parameter, and/or the terminal device does not clear a measurement reporting entry whose reference signal is an SSB when reconfiguring a fourth specific parameter. For example, it may be pre-specified that an absThreshSS-BlocksConsolidation threshold in an MO does not affect a measurement reporting entry whose reference signal is a CSI-RS. The terminal device receives the measurement configuration information from the network device, where the measurement configuration information includes an MO 5, and compared with that in a measurement parameter of the MO 5 stored in the terminal device, absThreshSS-BlocksConsolidation changes in the measurement parameter of the measurement configuration information of the MO 5, in other words, the terminal device needs to reconfigure absThreshSS-BlocksConsolidation of the MO 5. The terminal device may not clear, based on the preset rule, a measurement reporting entry whose reference signal is a CSI-RS in each measurement reporting entry associated with the MO 5.

Further, some specific scenarios may be further specified in the preset rule, so that the terminal device may process the measurement reporting entry based on the preset rule when in these specific scenarios.

In an NR system, SMTC timing uses an SpCell as a reference. In a scenario such as cell handover, redirection (Redirection), and reestablishment (Reestablishment), the SpCell may change. As a result, an SMTC configuration may change, and the terminal device may fail to monitor an SSB of a target cell in the SMTC window. Consequently, the terminal device cannot synchronize with the target cell or cannot accurately perform measurement.

For this problem, in this embodiment of this application, when an SpCell of the terminal device changes, the network device may send timing offset information to the terminal device, and the terminal device may reconfigure all existing SMTC configurations based on the timing offset information. Further, after reconfiguring the SMTC configurations, the terminal device may send a new configuration to the network device. If a source cell is synchronized with the target cell, the terminal device may not need to reconfigure SMTC information. The timing offset information may be a system frame number and frame timing difference (SFN and frame timing difference, SFTD). The following uses an example in which the timing offset information is an SFTD for description.

In an implementation, when a serving cell of the terminal device changes from the source cell to the target cell, the terminal device may reconfigure a related SMTC configuration based on an SFTD between the source cell and the target cell. The SFTD between the source cell and the target cell may be sent by the source cell or the target cell to the terminal device.

For example, it is assumed that the serving cell of the terminal device is a source cell A, an offset of an SMTC window is L, and it is assumed that a timing offset between a target cell B and the source cell A is ΔT. The offset of the SMTC window calculated based on the timing offset AT between the target cell B and the source cell A is L+ΔT. In this embodiment of this application, the network device sends the SFTD to the terminal device, so that the terminal device can reconfigure SMTC information when the serving cell changes, thereby resolving a problem that the original SMTC configuration is no longer applicable because a reference of SMTC timing changes when the serving cell changes.

In a scenario such as cell handover, redirection, and reestablishment, the terminal device needs to synchronize with a new cell, and a current serving cell sends an SMTC configuration to the terminal device. For example, in the HO scenario and a PSCell/SCell addition scenario, the network device may send the SMTC configuration to the terminal device by using an RRCReconfiguration message, and in the redirection scenario, the network device may send the SMTC configuration to the terminal device by using an RRCRelease message, so that the terminal device synchronizes with the new cell. However, a sending period of the SSB is not fixed and may be very long. The SMTC configuration sent by the current serving cell to the terminal device indicates a time domain time for sending the SSB of the target cell. Therefore, an SSB of a neighboring cell cannot be monitored in the SMTC window. As a result, synchronization with the neighboring cell cannot be performed. In addition, SMTC timing sent by the network device to the UE may be inaccurate. Specifically, an offset in the SMTC configuration may be inaccurate. For example, a base station calculates an offset of an SMTC based on an SFTD between the base station and a neighboring base station. However, if the neighboring base station restarts, the SFTD between the two base stations changes. In this case, the terminal device may not monitor an SSB of the neighboring base station in an SMTC window corresponding to an SMTC configuration sent by a current serving cell, and therefore cannot synchronize with a neighboring cell.

For this problem, in this embodiment of this application, after receiving an SMTC configuration from the network device, the terminal device may monitor an SSB of a target cell from a start location of an SMTC window. If the terminal device does not receive the SSB of the target cell in the entire SMTC window, the terminal device may continue to monitor the SSB of the target cell in an SS burst period. If no SSB of the target cell is received within the SS burst period, the terminal device stops monitoring and determines that synchronization fails. If an SSB of the target cell is received within the SS burst period, the terminal device synchronizes with the target cell based on the received SSB. The SS burst period may be an SS burst period separately sent by a serving cell to the target cell of the terminal device. Alternatively, the SS burst period may be a period in an SMTC configuration, in other words, the period in the SMTC configuration may also be understood as an SS burst period sent by the serving cell to the target cell of the UE.

In this embodiment of this application, the terminal device does not perform synchronization only in the SMTC window, but monitors at least one SS burst period. To be specific, if no synchronization is performed after an entire SMTC window is monitored, the terminal device continues to perform synchronization, and determines that the synchronization fails until it is the case that no synchronization succeeds after an entire SS burst period is monitored, and if synchronization succeeds in this period, stops monitoring. In a manner of prolonging monitoring duration, a probability of receiving the SSB of the target cell can be increased, and a problem that the SpCell cannot synchronize with the target cell because the SMTC configuration sent by the network device to the terminal device is inaccurate can be avoided to some extent.

Various implementations in the embodiments of this application may be used separately, or may be used in combination. For example, when sending the measurement configuration information to the terminal device, the network device may add the first indication information and the second indication information to an MO, and add the third indication information to a reporting configuration.

Based on a same inventive concept as that of the method embodiment, an embodiment of this application provides a measurement reporting entry processing apparatus. A structure of the measurement reporting entry processing apparatus may be shown in FIG. 4, and includes a receiving module 401, a processing module 402, and a sending module 403.

In a specific implementation, the measurement reporting entry processing apparatus may be specifically configured to implement the method performed by the terminal device in the embodiment shown in FIG. 3. The apparatus may be the terminal device, or may be a chip or a chipset in the terminal device, or a part of a chip configured to perform a related method function. The receiving module 401 is configured to receive indication information from a network device, where the indication information is used to indicate a processing manner of a measurement reporting entry. The processing module 402 is configured to process the measurement reporting entry based on the indication information received by the receiving module 401.

For example, the receiving module 401 may be specifically configured to receive first indication information and second indication information from the network device, where the first indication information is used to indicate whether to clear a measurement reporting entry corresponding to a first reference signal, and the second indication information is used to indicate whether to clear a measurement reporting entry corresponding to a second reference signal.

For example, the receiving module 401 may be specifically configured to receive measurement configuration information from the network device, where the measurement configuration information carries the first indication information and the second indication information.

For example, the processing module 402 is specifically configured to: when a measurement parameter of any measurement object and/or a measurement parameter of any reporting configuration is reconfigured, process, based on the first indication information, a measurement reporting entry that is associated with the any measurement object and whose reference signal in an associated reporting configuration is the first reference signal and/or a measurement reporting entry that is associated with the any reporting configuration and whose reference signal in the associated reporting configuration is the first reference signal; and process, based on the second indication information, a measurement reporting entry that is associated with the any measurement object and whose reference signal in the associated reporting configuration is the second reference signal and/or a measurement reporting entry that is associated with the any reporting configuration and whose reference signal in the associated reporting configuration is the second reference signal.

For example, the receiving module 401 may be specifically configured to receive measurement configuration information from the network device, where the measurement configuration information carries a measurement parameter of a first measurement object, and the measurement parameter of the first measurement object includes the first indication information and the second indication information.

For example, the processing module 402 may be specifically configured to: when the measurement parameter of the first measurement object is reconfigured, process, based on the first indication information, a measurement reporting entry that is associated with the first measurement object and whose reference signal in an associated reporting configuration is the first reference signal; and process, based on the second indication information, a measurement reporting entry that is associated with the first measurement object and whose reference signal in the associated reporting configuration is the second reference signal.

For example, the receiving module 401 may be specifically configured to receive measurement configuration information from the network device, where the measurement configuration information carries a measurement parameter of a first reporting configuration, and the measurement parameter of the first reporting configuration includes the first indication information and the second indication information.

For example, the processing module 402 may be specifically configured to: when the measurement parameter of the first reporting configuration is reconfigured, process, based on the first indication information, a measurement reporting entry that is associated with the first reporting configuration and whose reference signal in an associated reporting configuration is the first reference signal; and process, based on the second indication information, a measurement reporting entry that is associated with the first reporting configuration and whose reference signal in the associated reporting configuration is the second reference signal.

For example, the receiving module 401 may be specifically configured to receive third indication information from the network device, where the third indication information is used to indicate whether to clear the measurement reporting entry.

For example, the receiving module 401 may be specifically configured to receive measurement configuration information from the network device, where the measurement configuration information carries the third indication information.

For example, the processing module 402 may be specifically configured to:
when a measurement parameter of any measurement object and/or a measurement parameter of any reporting configuration is reconfigured, process, based on the third indication information, a measurement reporting entry associated with the any measurement object and/or a measurement reporting entry associated with the any reporting configuration.

For example, the receiving module 401 may be specifically configured to receive measurement configuration information from the network device, where the measurement configuration information carries a measurement parameter of a second measurement object, and the measurement parameter of the second measurement object includes the third indication information.

For example, the processing module 402 may be specifically configured to: when the measurement parameter of the second measurement object is reconfigured, process, based on the third indication information, a measurement reporting entry associated with the second measurement object.

For example, the receiving module 401 may be specifically configured to receive measurement configuration information from the network device, where the measurement configuration information carries a measurement parameter of a second reporting configuration, and the measurement parameter of the second reporting configuration includes the third indication information.

For example, the processing module 402 may be specifically configured to: when the measurement parameter of the second reporting configuration is reconfigured, process, based on the third indication information, a measurement reporting entry associated with the second reporting configuration.

For example, the processing module 402 may be further configured to: stop a timer related to a measurement identity associated with a measurement reporting entry when the measurement reporting entry is cleared, and reset a parameter related to the measurement identity associated with the measurement reporting entry.

For example, the sending module 403 may be configured to: report capability information to the network device, where the capability information is used to indicate the network device that the terminal device supports processing, under an indication of the network device, the measurement reporting entry.

In another specific implementation, the measurement reporting entry processing apparatus may be specifically configured to implement the method performed by the network device in the embodiment shown in FIG. 3. The apparatus may be the network device, or may be a chip or a chipset in the network device, or a part of a chip configured to perform a related method function. The processing module 402 is configured to determine indication information, where the indication information is used to indicate a processing manner of a measurement reporting entry; and the sending module 403 is configured to send the indication information to a terminal device.

For example, the sending module 403 may be specifically configured to: send first indication information and second indication information to the terminal device, where the first indication information is used to indicate the terminal device whether to clear a measurement reporting entry corresponding to a first reference signal, and the second indication information is used to indicate whether to clear a measurement reporting entry corresponding to a second reference signal.

For example, the sending module 403 may be specifically configured to send measurement configuration information to the terminal device, where the measurement configuration information carries the first indication information and the second indication information.

For example, the sending module 403 may be specifically configured to send measurement configuration information to the terminal device, where the measurement configuration information carries a measurement parameter of a first measurement object, and the measurement parameter of the first measurement object includes the first indication information and the second indication information.

For example, the sending module 403 may be specifically configured to send measurement configuration information to the terminal device, where the measurement configuration information carries a measurement parameter of a first reporting configuration, and the measurement parameter of the first reporting configuration includes the first indication information and the second indication information.

For example, the sending module 403 may be specifically configured to send third indication information to the terminal device, where the third indication information is used to indicate whether to clear the measurement reporting entry.

For example, the sending module 403 may be specifically configured to send measurement configuration information to the terminal device, where the measurement configuration information carries the third indication information.

For example, the sending module 403 may be specifically configured to send measurement configuration information to the terminal device, where the measurement configuration information carries a measurement parameter of a second measurement object, and the measurement parameter of the second measurement object includes the third indication information.

For example, the sending module 403 may be specifically configured to send measurement configuration information to the terminal device, where the measurement configuration information carries a measurement parameter of a second reporting configuration, and the measurement parameter of the second reporting configuration includes the third indication information.

For example, the receiving module 401 may be configured to receive capability information from the terminal device, where the capability information is used to indicate that the terminal device supports processing, under an indication of the network device, the measurement reporting entry.

Module division in this embodiment of this application is an example, is merely logical function division, and may be other division in actual implementation. In addition, function modules in the embodiments of this application may be integrated into one processor, or each of the modules may exist alone physically, or two or more modules are integrated into one module. The integrated module may be implemented in a form of hardware, or may be implemented in a form of a software functional module. It may be understood that for functions or implementations of modules in this embodiment of this application, refer to related descriptions in the method embodiments.

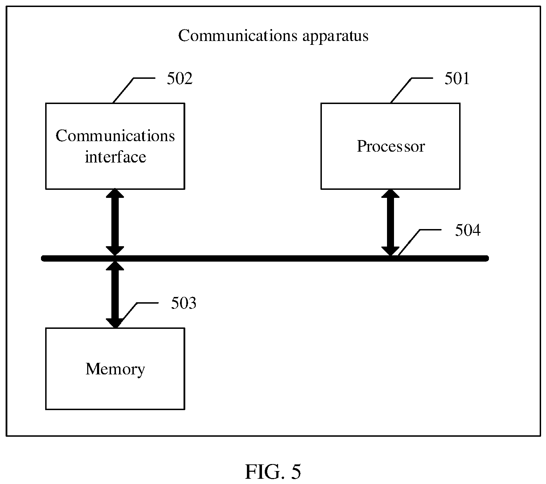

In a possible manner, a communications apparatus may be shown in FIG. 5. The communications apparatus may be a terminal device, a chip in the terminal device, or may be a network device or a chip in a network device. The communications apparatus may include a processor 501, a communications interface 502, and a memory 503. The processing module 402 may be a processor 501. The receiving module 401 and the sending module 403 may be a communications interface 502.

The processor 501 may be a central processing module (central processing unit, CPU), a digital processing module, or the like. The communications interface 502 may be a transceiver, may be an interface circuit such as a transceiver circuit, may be a transceiver chip, or the like. The communications apparatus further includes a memory 503, configured to store a program executed by the processor 502. The memory 503 may be a non-volatile memory such as a hard disk drive (hard disk drive, HDD) or a solid-state drive (solid-state drive, SSD), or may be a volatile memory (volatile memory) such as a random-access memory (random-access memory, RAM). The memory 503 is any other medium that can be configured to carry or store expected program code in a form of an instruction or a data structure and that can be accessed by a computer, but is not limited thereto.

The processor 501 is configured to execute a program code stored in the memory 503, and is specifically configured to execute the actions of the processing module 402. Details are not described herein again in this application.

In this embodiment of this application, a specific connection medium between the communications interface 501, the processor 502, and the memory 503 is not limited. In this embodiment of this application, the memory 503, the processor 502, and the communications interface 501 are connected by using a bus 504 in FIG. 5. The bus is represented by using a bold line in FIG. 5. The foregoing is merely an example for description. A connection manner of other components is not limited thereto. The bus may be classified into an address bus, a data bus, a control bus, and the like. For ease of representation, only one thick line is used to represent the bus in FIG. 5, but this does not mean that there is only one bus or only one type of bus.

An embodiment of the present invention further provides a computer readable storage medium, configured to store a computer software instruction used to execute operations that need to be executed by the processor. The computer software instruction includes a program used to execute the operations that need to be executed by the processor.

All or some of the foregoing embodiments may be implemented by using software, hardware, firmware, or any combination thereof. When software is used to implement the embodiments, the embodiments may be implemented completely or partially in a form of a computer program product. The computer program product includes one or more computer instructions. When the computer program instructions are loaded and executed on the computer, the procedure or functions according to the embodiments of this application are all or partially generated. The computer may be a general-purpose computer, a dedicated computer, a computer network, or other programmable apparatuses. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a DVD), a semiconductor medium (for example, a solid-state drive (Solid State Disk, SSD)), or the like.

This application is described with reference to the flowcharts and/or block diagrams of the method, the device (system), and the computer program product according to this application. It should be understood that computer program instructions may be used to implement each process and/or each block in the flowcharts and/or the block diagrams and a combination of a process and/or a block in the flowcharts and/or the block diagrams. These computer program instructions may be provided for a general-purpose computer, a dedicated computer, an embedded processor, or a processor of any other programmable data processing device to generate a machine, so that the instructions executed by a computer or a processor of any other programmable data processing device generate an apparatus for implementing a specific function in one or more processes in the flowcharts and/or in one or more blocks in the block diagrams.

These computer program instructions may be stored in a computer readable memory that can instruct the computer or any other programmable data processing device to work in a specific manner, so that the instructions stored in the computer readable memory generate an artifact that includes an instruction apparatus. The instruction apparatus implements a specific function in one or more processes in the flowcharts and/or in one or more blocks in the block diagrams.

These computer program instructions may be loaded onto a computer or another programmable data processing device, so that a series of operations and steps are performed on the computer or the another programmable device, thereby generating computer-implemented processing. Therefore, the instructions executed on the computer or the another programmable device provide steps for implementing a specific function in one or more processes in the flowcharts and/or in one or more blocks in the block diagrams.

Obviously, a person skilled in the art can make various modifications and variations to this application without departing from the spirit and scope of this application. This application is intended to cover these modifications and variations of this application provided that they fall within the scope of protection defined by the following claims and their equivalent technologies.

## Claims

1. A measurement reporting entry processing method, wherein the method comprises:
receiving indication information from a network device, wherein the indication information is used to indicate a processing manner of a measurement reporting entry; and
processing the measurement reporting entry based on the indication information.

2. The method according to claim 1, wherein the receiving indication information from a network device comprises:
receiving first indication information and second indication information from the network device, wherein the first indication information is used to indicate whether to clear a measurement reporting entry corresponding to a first reference signal, and the second indication information is used to indicate whether to clear a measurement reporting entry corresponding to a second reference signal.

3. The method according to claim 2, wherein the receiving first indication information and second indication information from the network device comprises:
receiving measurement configuration information from the network device, wherein the measurement configuration information carries the first indication information and the second indication information.

4. The method according to claim 3, wherein the processing the measurement reporting entry based on the indication information comprises:
when a measurement parameter of any measurement object and/or a measurement parameter of any reporting configuration is reconfigured, processing, based on the first indication information, a measurement reporting entry that is associated with the any measurement object and whose reference signal in an associated reporting configuration is the first reference signal and/or a measurement reporting entry that is associated with the any reporting configuration and whose reference signal in the associated reporting configuration is the first reference signal; and
processing, based on the second indication information, a measurement reporting entry that is associated with the any measurement object and whose reference signal in the associated reporting configuration is the second reference signal and/or a measurement reporting entry that is associated with the any reporting configuration and whose reference signal in the associated reporting configuration is the second reference signal.

5. The method according to claim 2, wherein the receiving first indication information and second indication information from the network device comprises:
receiving measurement configuration information from the network device, wherein the measurement configuration information carries a measurement parameter of a first measurement object, and the measurement parameter of the first measurement object comprises the first indication information and the second indication information.

6. The method according to claim 5, wherein the processing the measurement reporting entry based on the indication information comprises:
when the measurement parameter of the first measurement object is reconfigured, processing, based on the first indication information, a measurement reporting entry that is associated with the first measurement object and whose reference signal in an associated reporting configuration is the first reference signal; and processing, based on the second indication information, a measurement reporting entry that is associated with the first measurement object and whose reference signal in the associated reporting configuration is the second reference signal.

7. The method according to claim 2, wherein the receiving first indication information and second indication information from the network device comprises:
receiving measurement configuration information from the network device, wherein the measurement configuration information carries a measurement parameter of a first reporting configuration, and the measurement parameter of the first reporting configuration comprises the first indication information and the second indication information.

8. The method according to claim 7, wherein the processing the measurement reporting entry based on the indication information comprises:
when the measurement parameter of the first reporting configuration is reconfigured, if a reference signal type of the first reporting configuration is the first reference signal, processing, based on the first indication information, a measurement reporting entry associated with the first reporting configuration; and if a reference signal type of the first reporting configuration is the second reference signal, processing, based on the second indication information, a measurement reporting entry associated with the first reporting configuration.

9. The method according to claim 1, wherein the receiving indication information from a network device comprises:
receiving third indication information from the network device, wherein the third indication information is used to indicate whether to clear the measurement reporting entry.

10. The method according to claim 9, wherein the receiving third indication information from the network device comprises:
receiving measurement configuration information from the network device, wherein the measurement configuration information carries the third indication information.

11. The method according to claim 10, wherein the processing the measurement reporting entry based on the indication information comprises:
when a measurement parameter of any measurement object and/or a measurement parameter any reporting configuration is reconfigured, processing, based on the third indication information, a measurement reporting entry associated with the any measurement object and/or a measurement reporting entry associated with the any reporting configuration.

12. The method according to claim 9, wherein the receiving third indication information from the network device comprises:
receiving measurement configuration information from the network device, wherein the measurement configuration information carries a measurement parameter of a second measurement object, and the measurement parameter of the second measurement object comprises the third indication information.

13. The method according to claim 12, wherein the processing the measurement reporting entry based on the indication information comprises:
when the measurement parameter of the second measurement object is reconfigured, processing, based on the third indication information, a measurement reporting entry associated with the second measurement object.

14. The method according to claim 9, wherein the receiving third indication information from the network device comprises:
receiving measurement configuration information from the network device, wherein the measurement configuration information carries a measurement parameter of a second reporting configuration, and the measurement parameter of the second reporting configuration comprises the third indication information.

15. The method according to claim 14, wherein the processing the measurement reporting entry based on the indication information comprises:
when the measurement parameter of the second reporting configuration is reconfigured, processing, based on the third indication information, a measurement reporting entry associated with the second reporting configuration.

16. The method according to any one of claims 1 to 15, wherein the method further comprises:
when the measurement reporting entry is cleared, stopping a timer related to a measurement identity associated with the measurement reporting entry, and resetting a parameter related to the measurement identity associated with the measurement reporting entry.

17. The method according to any one of claims 1 to 16, wherein the method further comprises:
reporting capability information to the network device, wherein the capability information is used to indicate the network device that a terminal device supports processing, under an indication of the network device, the measurement reporting entry.

18. A measurement reporting entry processing method, wherein the method comprises:
determining indication information, wherein the indication information is used to indicate a processing manner of a measurement reporting entry; and
sending the indication information to a terminal device.

19. The method according to claim 18, wherein the sending the indication information to a terminal device comprises:
sending first indication information and second indication information to the terminal device, wherein the first indication information is used to indicate the terminal device whether to clear a measurement reporting entry corresponding to a first reference signal, and the second indication information is used to indicate whether to clear a measurement reporting entry corresponding to a second reference signal.

20. The method according to claim 19, wherein the sending first indication information and second indication information to the terminal device comprises:
sending measurement configuration information to the terminal device, wherein the measurement configuration information carries the first indication information and the second indication information.

21. The method according to claim 19, wherein the sending first indication information and second indication information to the terminal device comprises:
sending measurement configuration information to the terminal device, wherein the measurement configuration information carries a measurement parameter of a first measurement object, and the measurement parameter of the first measurement object comprises the first indication information and the second indication information.

22. The method according to claim 19, wherein the sending first indication information and second indication information to the terminal device comprises:
sending measurement configuration information to the terminal device, wherein the measurement configuration information carries a measurement parameter of a first reporting configuration, and the measurement parameter of the first reporting configuration comprises the first indication information and the second indication information.

23. The method according to claim 18, wherein the sending the indication information to a terminal device comprises:
sending third indication information to the terminal device, wherein the third indication information is used to indicate whether to clear the measurement reporting entry.

24. The method according to claim 23, wherein the sending third indication information to the terminal device comprises:
sending measurement configuration information to the terminal device, wherein the measurement configuration information carries the third indication information.

25. The method according to claim 23, wherein the sending third indication information to the terminal device comprises:
sending measurement configuration information to the terminal device, wherein the measurement configuration information carries a measurement parameter of a second measurement object, and the measurement parameter of the second measurement object comprises the third indication information.

26. The method according to claim 23, wherein the sending third indication information to the terminal device comprises:
sending measurement configuration information to the terminal device, wherein the measurement configuration information carries a measurement parameter of a second reporting configuration, and the measurement parameter of the second reporting configuration comprises the third indication information.

27. The method according to any one of claims 18 to 26, wherein the method further comprises:
receiving capability information from the terminal device, wherein the capability information is used to indicate that the terminal device supports processing, under an indication of a network device, the measurement reporting entry.

28. A measurement reporting entry processing apparatus, wherein the apparatus comprises a module configured to implement the method according to any one of claims 1 to 17; or the apparatus comprises a module configured to implement the method according to any one of claims 18 to 27.

29. A computer-readable storage medium, wherein the computer-readable storage medium stores a program; and when the program is read and executed by one or more processors, the method according to any one of claims 1 to 17 is capable of being implemented; or when the program is read and executed by one or more processors, the method according to any one of claims 18 to 27 is capable of being implemented.
